# EUROPEAN PATENT APPLICATION

(11) **EP 4 764 429 A1**
(43) Date of publication of application: **24.06.2026**
(21) Application number: 24222465.7
(22) Date of filing: 20.12.2024
(51) Int. Cl.: G01J 1/02, G01J 1/44, G01J 5/02

(54) **SUPERCONDUCTING NANOWIRE SINGLE-PHOTON DETECTOR WITH SHUNT RESISTOR**

(71) Applicant: ID Quantique S.A., 1227 Genève (CH)
(72) Inventor: RESTA, Giovanni Vincenzo, 1205 Geneva (CH); BUSSIÈRES, Félix, 1234 Vessy (CH)
(74) Representative: Kraus & Lederer PartGmbB

(57) **Abstract**

The present invention relates to a single-photon detector (2000) comprising a low temperature region (LT) and a high temperature region (HT), wherein a temperature in the low temperature region (LT) is lower than a temperature in the high temperature region (HT), a superconducting nanowire (1100), a shunt impedance (2400) connected in parallel with the superconducting nanowire (1100), wherein the superconducting nanowire (1100) and the shunt impedance (2400) are both included in the low temperature region (LT). The invention further relates to a method (3000) for operating the single-photon detector (2000) so as to reduce measurement jitter.

## Description

The present invention relates to the field of superconducting nanowire single-photon detector.

### Background of the invention

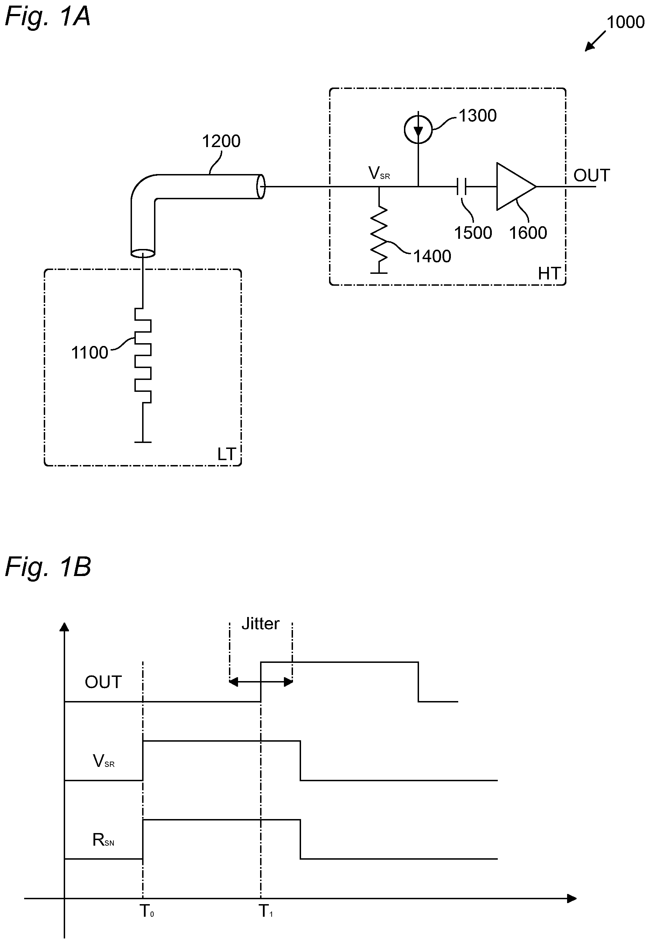

Figure 1A schematically illustrates a single-photon detector 1000 based on a superconducting nanowire.

The single-photon detector 1000 comprises various elements operating in two regions having different temperature. In particular, a low temperature region LT and a high temperature region HT are generally configured so that the temperature in the low temperature region LT is lower than the temperature in the high temperature region HT.

The single-photon detector 1000 comprises a superconducting nanowire 1100 in the low temperature region LT. The superconducting nanowire 1100 is generally configured to have an electrical resistance close to, or equal to, 0 Ohms, until it is hit by a predetermined number of photons, preferably a single photon, or more. When the superconducting nanowire 1100 is hit by the predetermined number of photons, its resistance increases in a detectable manner. In practical applications, an increase in resistance of 100 Ohm, preferably 1k Ohm, even more preferably 10k Ohm, are known to be implemented.

The single-photon detector 1000 further comprises a connector 1200, configured to propagate an electrical signal between the low temperature region LT and the high temperature region HT, for instance a cable, preferably a coaxial cable.

In the high temperature region HT, the single-photon detector 1000 generally comprises electrical components capable of biasing the superconducting nanowire 1100 and detecting a change in the resistance value of the superconducting nanowire 1100. In the example illustrated in figure 1A, those comprise a current source 1300, a shunt resistor 1400, a de-coupling capacitor 1500 and an amplifier 1600.

In operation, the current from the current source 1300 flows entirely, or mostly, through the superconducting nanowire 1100, as this has a resistance proximate to, or equal to, 0 Ohm. When the superconducting nanowire 1100 is hit by a predetermined number of photons and its resistance increases. This causes the voltage at the input of the amplifier 1600 to raise, or increase. This increase is amplified by the amplifier 1600 and provided as an output signal OUT.

Figure 1B schematically illustrates a timing of the single-photon detector 1000 of figure 1A.

At a time T₀ the superconducting nanowire 1100 is hit by the predetermined number of photons and its resistance R_{SN} increases. This causes the voltage at node V_{SN} of the shunt resistor 1400 to increase. This, with the time delay necessary for the various components to reach, cause the output signal OUT to switch at a time T₁. The difference between T₀ and T₁ can be computed depending on the specific configuration of the single-photon detector 1000 so that, by measuring the change in the output signal at T₁, it is possible to determine the value of T₀ at which the superconducting nanowire 1100 was hit by the predetermined number of photons.

However, it is known that in practical implementation the timing of the switch of the output signal OUT can be subjected to a variation, around T₁, known as jitter. The total jitter is the sum of various jitter components, for instance due to the intrinsic operation of the superconducting nanowire 1100, in the transmission of the signal between the low temperature region LT and the high temperature region HT, and in the signal processing taking place in the high temperature region HT.

In practical applications, the jitter can be in the order of tens of picoseconds, or more. This introduces uncertainty in the measurement of T₀.

This, in turn, reduces the frequency at which the single-photon detector 1000 can operate. This reduction in operating frequency is particularly limiting in various technical fields such as, for instance, quantum encryption. Alternatively, or in addition, the uncertainty introduced by the jitter causes a corresponding uncertainty in measurements derived from the value of T₀, such as, for instance, LIDAR applications, where an uncertainty of, for instance, 100 picoseconds in a time-of-flight measurement results in an uncertainty of approximately 3cm, which might not be compatible with some applications.

There is therefore a need for a single-photon detector 1000 with a reduced jitter.

### Summary of the invention

The above-mentioned problems are solved by the invention, which is defined by the claims.

An embodiment can relate to a single-photon detector comprising a low temperature region and a high temperature region, wherein a temperature in the low temperature region is lower than a temperature in the high temperature region, a superconducting nanowire, a shunt impedance connected in parallel with the superconducting nanowire, wherein the superconducting nanowire and the shunt impedance are both included in the low temperature region.

In some embodiments, the shunt impedance is, or comprises, a resistor with a resistance value of at least 10 Ohms, preferably at least 20 Ohms, even more preferably at least 40 Ohms.

In some embodiments, the shunt impedance is, or comprises, a resistor with a resistance value of at most 1k Ohms, preferably at most 500 Ohms, even more preferably at most 200 Ohms.

In some embodiments, the shunt impedance and the superconducting nanowire implement an LR circuit with a corresponding time constant, the shunt impedance and/or the superconducting nanowire are configured such that the time constant causes current to flow in the superconducting nanowire, after a photon detection, with a timing that does not trigger the superconducting nanowire.

In some embodiments, the shunt impedance and the superconducting nanowire implement an LR circuit with a corresponding time constant, the shunt impedance and/or the superconducting nanowire are configured such that the time constant is at least 1ns, preferably at least 2ns, even more preferably at least 5ns.

In some embodiments, the shunt impedance and the superconducting nanowire implement an LR circuit with a corresponding time constant, the shunt impedance and/or the superconducting nanowire are configured such that the time constant is at most 50ns, preferably at most 40ns, even more preferably at most 30ns.

In some embodiments, the single-photon detector can further comprise an electrical connector (2200) with a first end (2210) connected to, and/or positioned in, the low temperature region and a second end (2220), opposite the first end (2210), connected to, and/or positioned in, the high temperature region, wherein the shunt impedance is connected in parallel with the superconducting nanowire at the first end (2210).

In some embodiments, the shunt impedance is connected to the superconducting nanowire through a conductor having a length of less than 10cm, even preferably less than 5cm, even more preferably less than 2.5cm.

In some embodiments, the shunt impedance is, or comprises, a resistor implemented as a thin film resistor.

A further embodiment can relate to a method for reducing jitter in a single-photon detector, the single-photon detector comprising a low temperature region and a high temperature region, wherein a temperature in the low temperature region is lower than a temperature in the high temperature region, a superconducting nanowire, a shunt impedance, the method comprising connecting (S31) the shunt impedance in parallel with the superconducting nanowire in the low temperature region, measuring (S32) a signal from the superconducting nanowire.

### Brief description of the drawings

Figure 1A schematically illustrates a single-photon detector 1000,
Figure 1B schematically illustrates a timing of the single-photon detector 1000,
Figure 2 schematically illustrates a single-photon detector 2000,
Figure 3 schematically illustrates a method 3000 for reducing jitter in a single-photon detector 2000.

### Detailed description of preferred embodiments

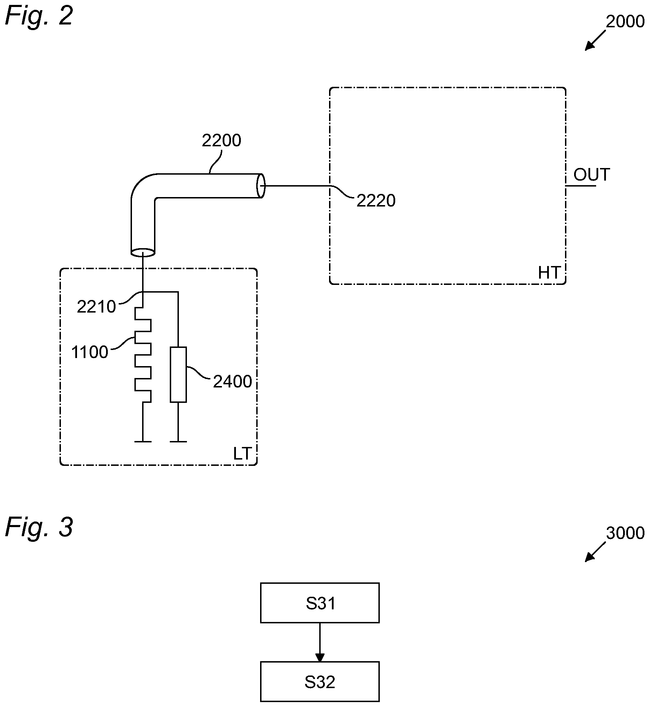

Figure 2 schematically illustrates a single-photon detector 2000. The single-photon detector 2000 comprising a low temperature region LT and a high temperature region HT, the low temperature region LT comprising a superconducting nanowire 1100 and a shunt impedance 2400, connected in parallel with the superconducting nanowire 1100.

A temperature in the low temperature region LT is lower than a temperature in the high temperature region HT. In practical applications, the low temperature region LT can have temperatures allowing operation of a superconducting nanowire 1100 as a photon detector. It will be clear to those skilled in the art that the range of temperatures will depend on the material and configuration of the superconducting nanowire 1100. For current technologies, the low temperature region LT is preferably operating at values lower than 10K, even more preferably lower than 5K.

The high temperature region HT can have higher temperatures than the low temperature region LT, but preferably still lower than room temperature. Elements in the high temperature region HT can still suffer from thermal noise, so that lower temperatures are preferable. In practical applications, the high temperature region HT can have temperatures of at most 100K, preferably at most 80K, even more preferably at most 60K. However, maintaining various components at low temperatures requires significant technological complexity, so that the high temperature region HT can have temperatures of at least 20K, preferably at least 30K, even more preferably at least 40K.

Thanks to this configuration, it has been found that the jitter of the single-photon detector 2000 is lowered. In particular, the placement of the shunt impedance 2400 in the low temperature region LT, as well as the connection to the superconducting nanowire 1100 in the low temperature region LT has been found by the inventors to lower the jitter of the single-photon detector 2000, compared to implementations, such as the one in figure 1A, where the shunt impedance 1400 is not placed in the low temperature region LT.

In preferred embodiments, the shunt impedance 2400 is, or comprises, a resistor with a resistance value of at least 10 Ohms, preferably at least 20 Ohms, even more preferably at least 40 Ohms. Those values have been found to be particularly advantageous, as lower values of resistances are generally too low for the shunt impedance 2400 to generate a sufficient voltage drop across it once the current starts flowing through the shunt impedance 2400, following a photon detection. This voltage drop is needed to generate, and/or maintain, a signal at node 2210 which can then be detected as an indication of the photon detection.

Moreover, as the value of the resistance is reduced, more current will flow in the shunt impedance 2440, thus the power dissipated in the shunt impedance 2400 increases. Since the shunt impedance is placed in the low temperature region, LT, a high power dissipation is preferably avoided, so that the temperature in the low temperature region LT can be maintained low enough for the correct operation of the superconducting nanowire 1100.

On the other hand, the resistance value, R, of the shunt impedance 2400 and the equivalent inductance value, L, of the superconducting nanowire 1100 form a parallel LR circuit with a L/R time constant. In case the shunt impedance 2400 comprises an inductance component, in addition to the resistance value R, this can be taken into account in the computation of the time constant in a manner per se known. If the value of R is too high, then the time constant becomes too small and current can flow too quickly in the parallel LR circuit. After a detection by the superconducting nanowire 1100, the superconducting nanowire 1100 needs sufficient time to cool down before a subsequent detection can be carried out. If the current flows too quickly in the LR circuit after a detection, the superconducting nanowire 1100 has not sufficient time for cooling down from the previous detection, and the flowing of the current causes it to switch again, even in the absence of a photon. The switching of the superconducting nanowire 1100 then starts the same cycle, resulting in an endless series of consecutive switches by the superconducting nanowire 1100. An even further increase of the shunt resistance can lead to latching, where the superconducting nanowire 1100 is locked in a resistive state and no photon detection is possible.

Thus, in preferred embodiments, the shunt impedance 2400 is, or comprises, a resistor with a resistance value of at most 1k Ohms, preferably at most 500 Ohms, even more preferably at most 200 Ohms. Those values have been found to be particularly advantageous, as they avoid latching of commonly available superconducting nanowires 1100.

As indicated above, the latching phenomenon is dictated by a too low L/R value of the parallel circuit formed by the shunt impedance 2400 and the equivalent inductance value L of the superconducting nanowire. Thus, in some embodiments, the single-photon detector 2000 can be configured such that the time constant has a value which avoids the latching.

In particular, in some embodiments, the shunt impedance 2400 and the superconducting nanowire 1100 implement an LR circuit with a corresponding time constant, and the shunt impedance 2400 and/or the superconducting nanowire 1100 are configured such that the time constant causes current to flow in the superconducting nanowire 1100, after a photon detection, with a timing that does not trigger the superconducting nanowire 1100. In other words, the shunt impedance 2400 and/or the superconducting nanowire 1100 are configured such that the time constant value is sufficient for the superconducting nanowire 1100 to cool down, after a photon detection, enough to avoid current flowing in it to trigger it. It will be clear to those skilled in the art that, due to the large variety of possible implementations of the superconducting nanowire 1100, the value of the shunt impedance 2400 can be configured to different values so as to obtain the result above.

Alternatively, or in addition, in some embodiments the shunt impedance 2400 and/or the superconducting nanowire 1100 are configured such that the time constant is at least 1ns, preferably at least 2ns, even more preferably at least 5ns. Those values have been found to be sufficient, in practical implementations, to avoid latching of the superconducting nanowire 1100

Preferably, in some embodiments, the time constant is at most 50ns, preferably at most 40ns, even more preferably at most 30ns. Those values have been found to be particularly suitable for some practical implementations.

In the embodiments above, reference is made to the time constant of the equivalent LR circuit formed by the shunt impedance 2400 and the superconducting nanowire 1100. It will be clear to those skilled in the art that the value of the time constant is a function of the configuration of the shunt impedance 2400 and the superconducting nanowire 1100.

It has therefore been described how characteristics of the shunt impedance 2400 and/or the superconducting nanowire 1100 can be configured such that a correct operation the superconducting nanowire 1100 is enabled.

In preferred embodiments, the single photon detector 2000 can further comprise an electrical connector 2200, having a first end 2210 and a second end 2220, opposite the first end 2210. The electrical connector 2200 can be, for instance, one or more cables. Preferably, the electrical connector 2200 can be a coaxial cable. Even more preferably, it can be the inner conductor, or soul, of a coaxial cable.

The first end 2210 can be connected to, and/or positioned in, the low temperature region LT. With the term "positioned in" it can be understood that the first end 2210 is physically contained in the low temperature region LT. With the term "connected to" it can be understood that the first end 2210 may or may not be physically contained in the low temperature region, whereas the first end 2210 is in electrical contact with one or more components placed in the low temperature region LT. The electrical contact between the first end 2210 and the one or more components placed in the low temperature region LT can be implemented in any known manner, for instance by using a conductor other than the electrical connector 2200.

In the illustrated embodiment of figure 2, the first end 2210 is both positioned in the low temperature region LT and connected to elements within the low temperature region LT. In particular, the first end 2210 is connected to a node, which is also connected to one end of the shunt impedance 2400 and to one end of the superconducting nanowire 1100. In some embodiments, it will be understood that the connection between this node and the mentioned elements, namely the first end 2210, the shunt impedance 2400 and the superconducting nanowire 1100 can be direct, that is, without any element other than conductors, such as cables, in between, or indirect, that is, with other elements in between, such as, for instance, one or more of resistors, inductances, or capacitances.

Thanks to this configuration, the shunt impedance 2400 is connected in parallel with the superconducting nanowire 1100 at the first end 2210. Preferably this connection is achieved at the first end 2210 itself.

As further illustrated in figure 2, the second end 2220 can be connected to, and/or positioned in, the high temperature region HT. The same considerations indicated above for the interpretation of connected to, and/or positioned in also apply to the second end 2200.

It will be clear to those skilled in the art that the circuit configuration of the high temperature region HT can be implemented in various manners. In one possible embodiment, for instance, the high temperature region HT can be implemented as illustrated in figure 1A, without the shunt impedance 1400.

In preferred embodiments, the shunt impedance 2400 is connected to the superconducting nanowire 1100 through a conductor having a length of less than 8cm, even preferably less than 4cm, even more preferably less than 2cm.

The length of the connector between the superconducting nanowire 1100 and the shunt impedance 2400 influences the reflection, of a signal generated at the superconducting nanowire 1100, due the impedance mismatch caused by the shunt impedance 2400. This reflection is preferably minimized, or avoided. The inventors have found that, in practical embodiments, the frequency of the signals generated by the superconducting nanowire 1100 are approximately 2-3 GHz. The wavelength of those frequencies in the conductor between the superconducting nanowire 1100 and the shunt impedance 2400 is thus in the range of, approximately, 10-15 cm. With a length of the conductor as indicated above, it is advantageously possible to minimize, or avoid, the reflection.

Alternatively, or in addition, in preferred embodiments, the length of the conductor can be defined to be less than half, preferably less than one quarter of a wavelength of the maximum frequency of a signal generated by the superconducting nanowire 1100 upon detection of a photon. In preferred embodiments, a maximum distance between the shunt impedance 2400 and the electrical connector 2200 and/or a maximum distance between the superconducting nanowire 1100 and the electrical connector 2200 can be limited to 12cm, preferably 6 cm, even more preferably 3cm.

In the embodiments described above, the shunt impedance 2400 has been described as being, or comprising, a resistor. While in principle any technology can be used for implementing this resistor, in preferred embodiments the resistor can be advantageously implemented as a thin film resistor. Such implementation is preferred as those resistors have a low resistance change with temperature, so that the operation in the low temperature region LT does not result in a significant change in resistance.

Although the invention has been described above in terms of devices, it will be clear to those skilled in the art that the invention is not limited to such implementation and can also be implemented as a method.

More specifically, a method 3000 can be implemented for reducing jitter in a single-photon detector 2000. The single-photon detector 2000 can be implemented according to any embodiment above and, in particular, configured so as to comprise a low temperature region LT and a high temperature region HT, wherein a temperature in the low temperature region LT is lower than a temperature in the high temperature region HT, a superconducting nanowire 1100, and a shunt impedance 2400.

As visible in figure 3 the method 3000 can comprise a step S31 of connecting the shunt impedance 2400 in parallel with the superconducting nanowire 1100 in the low temperature region LT, and a step S32 of measuring a signal from the superconducting nanowire 1100, after step S31.

Thanks to this implementation, the measurement of the signal from the superconducting nanowire 1100 can be achieved with a reduced jitter.

In particular, a novel approach to reducing jitter in single-photon detectors has been described to be based on connecting a shunt impedance in parallel with a superconducting nanowire in the low temperature region, LT, of the detector. This configuration minimizes reflections of signals generated by the superconducting nanowire, ensuring stable and accurate detection. In preferred embodiments, by utilizing a thin film resistor as the shunt impedance and/or maintaining a short conductor length between the impedance and the nanowire, timing variations between photon detection and electrical signal generation can be significantly reduced. This approach enables improved performance in single-photon detectors, enhancing their capabilities.

### List of reference numerals

1000: single-photon detector
1100: superconducting nanowire
1200: electrical connector
1300: current source
1400: shunt impedance
1500: capacitor
1600: amplifier
HT: low temperature region
LT: low temperature region
2000: single-photon detector
2200: electrical connector
2210, 2220: end
2400: shunt impedance
3000: method for reducing jitter in a single-photon detector
S31: connecting shunt impedance in parallel with superconducting nanowire in low temperature region
S32: measuring a signal with the superconducting nanowire

## Claims

1. Single-photon detector (2000) comprising a low temperature region (LT) and a high temperature region (HT), wherein a temperature in the low temperature region (LT) is lower than a temperature in the high temperature region (HT),
a superconducting nanowire (1100),
a shunt impedance (2400) connected in parallel with the superconducting nanowire (1100),
**characterized in that**
the superconducting nanowire (1100) and the shunt impedance (2400) are both included in the low temperature region (LT).

2. Single-photon detector (2000) according to claim 1, wherein
the shunt impedance (2400) is, or comprises, a resistor with a resistance value of at least 10 Ohms, preferably at least 20 Ohms, even more preferably at least 40 Ohms.

3. Single-photon detector (2000) according to claim 1 or 2, wherein
the shunt impedance (2400) is, or comprises, a resistor with a resistance value of at most 1k Ohms, preferably at most 500 Ohms, even more preferably at most 200 Ohms.

4. Single-photon detector (2000) according to any previous claim, wherein
the shunt impedance (2400) and the superconducting nanowire (1100) implement an LR circuit with a corresponding time constant,
the shunt impedance (2400) and/or the superconducting nanowire (1100) are configured such that the time constant causes current to flow in the superconducting nanowire (1100), after a photon detection, with a timing that does not trigger the superconducting nanowire (1100).

5. Single-photon detector (2000) according to any previous claim, wherein
the shunt impedance (2400) and the superconducting nanowire (1100) implement an LR circuit with a corresponding time constant,
the shunt impedance (2400) and/or the superconducting nanowire (1100) are configured such that the time constant is at least 1ns, preferably at least 2ns, even more preferably at least 5ns.

6. Single-photon detector (2000) according to any previous claim, wherein
the shunt impedance (2400) and the superconducting nanowire (1100) implement an LR circuit with a corresponding time constant,
the shunt impedance (2400) and/or the superconducting nanowire (1100) are configured such that the time constant is at most 50ns, preferably at most 40ns, even more preferably at most 30ns.

7. Single-photon detector (2000) according to any previous claim,
further comprising an electrical connector (2200) with a first end (2210) connected to, and/or positioned in, the low temperature region (LT) and a second end (2220), opposite the first end (2210), connected to, and/or positioned in, the high temperature region (HT),
wherein the shunt impedance (2400) is connected in parallel with the superconducting nanowire (1100) at the first end (2210).

8. Single-photon detector (2000) according to claim 7, wherein
the shunt impedance (2400) is connected to the superconducting nanowire (1100) through a conductor having a length of less than 10cm, even preferably less than 5cm, even more preferably less than 2.5cm.

9. Single-photon detector (2000) according to any previous claim, wherein
the shunt impedance (2400) is, or comprises, a resistor implemented as a thin film resistor.

10. A method (3000) for reducing jitter in a single-photon detector (2000), the single-photon detector (2000) comprising
a low temperature region (LT) and a high temperature region (HT), wherein a temperature in the low temperature region (LT) is lower than a temperature in the high temperature region (HT),
a superconducting nanowire (1100),
a shunt impedance (2400),
the method comprising
connecting (S31) the shunt impedance (2400) in parallel with the superconducting nanowire (1100) in the low temperature region (LT),
measuring (S32) a signal from the superconducting nanowire (1100).
